# EUROPEAN PATENT SPECIFICATION

(11) **EP 4 143 455 B1**
(45) Date of publication and mention of the grant of the patent: **13.08.2025**
(21) Application number: 21723666.0
(22) Date of filing: 28.04.2021
(51) Int. Cl.: F16D 66/00, F16D 55/22, F16D 65/092, G01L 5/00, B60T 17/22, B60T 8/17

(54) **TORQUE SENSOR AND BRAKE ASSEMBLY**
DREHMOMENTSENSOR UND BREMSANORDNUNG
CAPTEUR DE COUPLE ET ENSEMBLE FREIN

(30) Priority: 29.04.2020 CN 202020684778 U
(43) Date of publication of application: 08.03.2023
(73) Proprietor: Robert Bosch GmbH, 70442 Stuttgart (DE)
(72) Inventor: LIANG, Gaofeng, Suzhou, Jiangsu, Jiangsu 215021 (CN); SCHEER, Mirko, Suzhou, Jiangsu, Jiangsu 215021 (CN)
(86) International application number: PCT/EP2021/061178
(87) International publication number: WO 2021/219748

(56) References cited:
- CN-A- 110 715 759
- DE-A1- 102011 002 567
- DE-A1- 102012 223 104
- US-A1- 2013 233 065

## Description

### Technical field

The present invention relates to the technical field of sensors, in particular to a torque sensor and a brake assembly.

### Background art

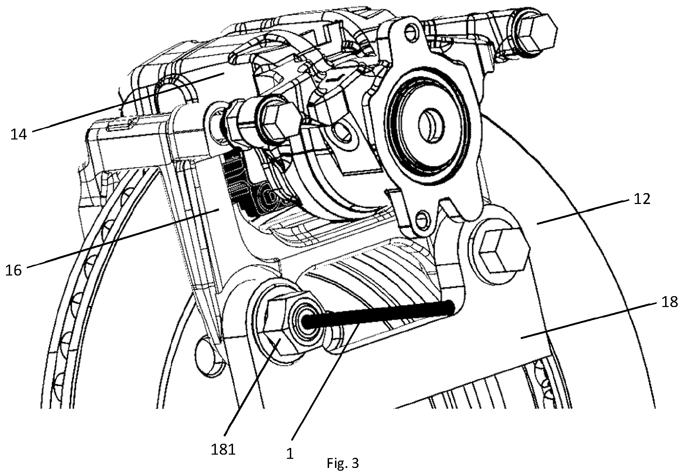

Referring to Fig. 3, an existing brake assembly comprises a brake disk 12, a brake caliper 14, a caliper support 16 and a mounting bracket 18, wherein the brake disk 12 is securely connected to an axle (not shown), the brake caliper 14 is mounted on the caliper support 16 in such a way as to be capable of performing a clamping action, the mounting bracket 18 is securely mounted on the vehicle body, and the caliper support 16 is securely connected to the mounting bracket 18. In the prior art, the caliper support 16 and mounting bracket 18 are fixed together by bolts.

US 2013/233065 A1 discloses a brake mounting for determining a measurement variable for an acting brake force or frictional force on a disk brake of a motor vehicle of the type having a caliper acting on friction linings which frictionally engage a brake disc and which can be attached to the motor vehicle. The brake mounting comprises at least two lining guide rails disposed across the brake disk and on which the friction linings on both sides of the brake disk are guided so as to be movable to a limited extent in the axial z axis direction of the brake disk, and a sensor device, by means of which an x axis displacement of at least one of the lining guide rails, caused by a brake force effect in a direction perpendicular to the axial z axis direction of the brake disk is measured.

CN 110715759 A discloses a braking torque detection device for detecting a braking torque applied to a wheel by a brake mechanism. The braking torque detection device comprises at least one sensor comprising a sensor element on or within a brake component of the brake mechanism, wherein the brake component exhibits elastic deformation or displacement under a condition that the wheel is subjected to braking torque from the brake mechanism. The sensor element is configured to deform as a result of the deformation or displacement of the brake component.

DE 10 2012 223 104 A1 discloses a brake holder having two lining guide rails overlapping a brake disk, on which friction linings arranged on both sides of the brake disk are displaceably guided in the axial direction of the brake disk in a limited manner. A sensor device is provided, by which a displacement of the brake holder induced by the action of braking force is measured in a direction different from the displacement direction that is perpendicular to the axial direction of the brake disk.

### Summary of the invention

The invention is defined by the independent claims. The dependent claims define advantageous embodiments.

In view of the above, the present invention provides a torque sensor and a brake assembly, which are convenient to install.

First of all, according to one aspect of the present invention, it provides a torque sensor, having a sensor head and a transmission part, wherein the sensor head comprises a base, a sensor chip element and a casing, the casing being substantially columnar, and the casing having a receiving space provided therein for receiving the base, the sensor chip element and at least a portion of the transmission part; the casing is made of a high-strength metal; a first fixing end, a second fixing end and a deformation part located between the first fixing end and second fixing end are formed on an outer surface of the casing, for the purpose of mounting the torque sensor on a vehicle body, and the deformation part is magnetic, and configured to generate a magnetic field.

According to a feasible embodiment, the casing is made of high-strength alloy steel, high-strength stainless steel or universal high-strength bolt material.

According to a feasible embodiment, an external thread is provided on an outer surface of at least one of the first fixing end and second fixing end; or external threads are provided on outer surfaces of both the first fixing end and the second fixing end.

According to a feasible embodiment, the casing further comprises at least one protruding shoulder, disposed between the first fixing end and second fixing end; a sunken region is provided between the first shoulder and second shoulder, thereby forming the deformation part, the depth of the sunken region being related to the deformation that the deformation part is capable of experiencing.

According to a feasible embodiment, the casing comprises a first shoulder and a second shoulder, wherein the first shoulder is close to the first fixing end, and the second shoulder is close to the second fixing end.

According to a feasible embodiment, the sensor chip element is securely disposed on the base, and is a torque information acquisition component in the torque sensor.

According to a feasible embodiment, the sensor chip element is an integrated circuit element having the function of sensing a change in magnetic field; the sensor chip element is close to the deformation part, and configured to detect a change in magnetic field caused by minute deformation experienced by the deformation part when subjected to a force, and convert the change in magnetic field to an electrical signal, for example a voltage signal, a resistance signal and/or a capacitance signal, corresponding to the size of a torque acting on the torque sensor.

According to a feasible embodiment, the casing sensor chip element is provided with a pin, and the transmission part is connected to the pin of the sensor chip element.

In addition, according to another aspect of the present invention, a brake assembly is also provided, comprising a brake disk, a brake caliper, a caliper support and a mounting bracket, wherein the brake disk is securely connected to an axle, the brake caliper is movably mounted on the caliper support, the mounting bracket is securely mounted on a vehicle body, and the caliper support is securely connected to the mounting bracket; one or more of the torque sensor as claimed in any one of claims 1 - 7 is fitted between the caliper support and the mounting bracket, securely connecting the caliper support and the mounting bracket.

According to a feasible embodiment, the caliper support is provided with a first mounting hole, the mounting bracket is provided with a second mounting hole, the first fixing end is screwed into the first mounting hole of the caliper support, and the second fixing end is inserted into the second mounting hole of the mounting bracket.

According to a feasible embodiment, corresponding to the provision of an external thread on an outer surface of at least one of the first fixing end and second fixing end, a corresponding at least one of the first mounting hole and second mounting hole is provided with an internal thread, for mating with the external thread; or internal threads are provided in both the first mounting hole and the second mounting hole, for mating with corresponding external threads of the first fixing end and second fixing end respectively.

According to a feasible embodiment, the mounting bracket comprises a bottom face, and a supporting face protruding inside the second mounting hole, the supporting face being configured to support the second shoulder; the distance between the supporting face and the bottom face is substantially equal to the distance between a bottom face of the first shoulder and a top face of the second shoulder; the first shoulder is configured to abut a surface of the caliper support, the second shoulder is configured to abut the supporting face, and a bush is provided between the second fixing end and the second mounting hole.

According to the invention, the torque sensor of the present utility model is fitted between the caliper support and the mounting bracket, and can not only be used to detect the size of braking torque, but can also securely connect the caliper support and mounting bracket together in place of a bolt in the prior art; there is no need to alter the structure of the existing brake assembly, installation is convenient, the overall cost is low, and detected signals are stable and reliable.

### Brief description of the drawings

The technical solution of the present invention will be described in further detail below with reference to the accompanying drawings and embodiments, but these drawings have been designed merely with the aim of providing an explanation, and are only intended to conceptually illustrate the structure here, so did not need to be drawn to scale.
Fig. 1 is a three-dimensional structural schematic diagram of an embodiment of the torque sensor according to the present invention.
Fig. 2 is a schematic sectional view of the embodiment of the torque sensor shown in Fig. 1.
Fig. 3 is a partial three-dimensional schematic drawing of the mounting position, on the existing brake assembly, of the embodiment of the torque sensor shown in Fig. 1.
Fig. 4 is a partial schematic sectional view of the mounting position, on the existing brake assembly, of the embodiment of the torque sensor shown in Fig. 1.

### Detailed description of the invention

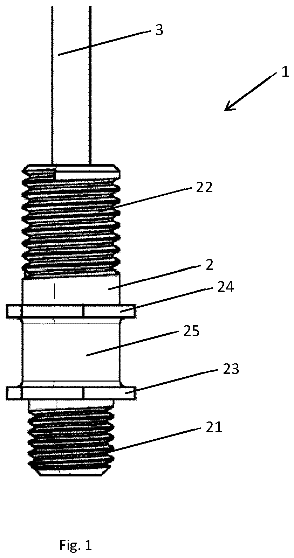

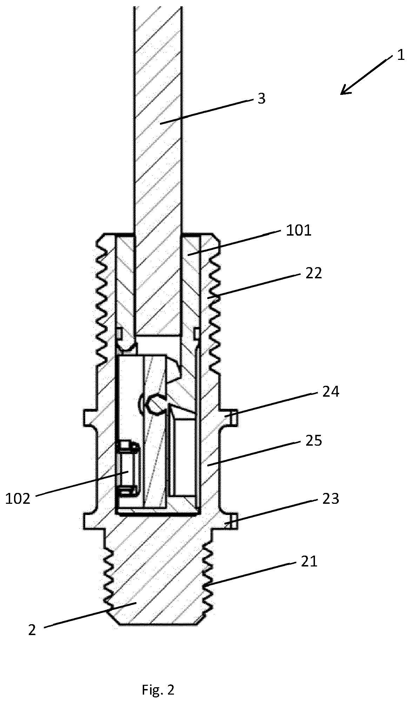

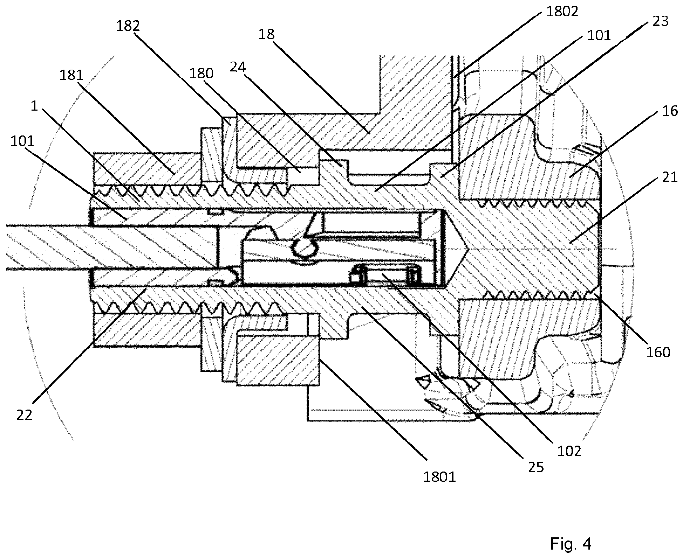

Referring to Figs. 1 to 4, the three-dimensional structure of an embodiment of the torque sensor according to the present invention is shown schematically as a whole. In this embodiment, the torque sensor 1 is provided with a sensor head and a transmission part 3; a detailed explanation is given below by means of this embodiment.

The sensor head of the torque sensor 1 in this embodiment comprises a base 101, a sensor chip element 102 and a casing 2. A receiving space is provided in the casing 2, for receiving the base 101, the sensor chip element 102 and at least a portion of the transmission part 3. The casing 2 is made of a high-strength metal, for example high-strength alloy steel, high-strength stainless steel or universal high-strength bolt material, etc. The casing 2 is substantially columnar, and comprises a first fixing end 21, a second fixing end 22 and a deformation part 25 which are integrally formed. The first fixing end 21 and second fixing end 22 are used for mounting the torque sensor 1 on the vehicle body; the deformation part 25 is magnetic, and is configured to generate a magnetic field. The use of the casing 2 is not restricted by the vehicle model/motor vehicle model.

Preferably, an external thread is provided on an outer surface of at least one of the first fixing end 21 and second fixing end 22. In this embodiment, external threads are provided on outer surfaces of both the first fixing end 21 and the second fixing end 22, in order to facilitate the mounting of the torque sensor 1 on the vehicle body.

The casing 2 comprises a first shoulder 23 and a second shoulder 24, both being disposed between the first fixing end 21 and second fixing end 22, wherein the first shoulder 23 is close to the first fixing end 21, and the second shoulder 24 is close to the second fixing end 22. A sunken region is formed between the first shoulder 23 and second shoulder 24, thereby forming the deformation part 25; the sunken region facilitates deformation when subjected to a force. The depth of the sunken region is related to the deformation that the deformation part 25 is capable of experiencing. The depth of the sunken region is set according to the deformation requirements of the deformation part 25.

The sensor chip element 102 is securely disposed on the base 101, and is a torque information acquisition component in the torque sensor. The sensor chip element 102 is for example an integrated circuit element having the function of sensing a change in magnetic field. The sensor chip element 102 is close to the deformation part 25, and configured to detect a change in magnetic field caused by minute deformation experienced by the deformation part 25 when subjected to a force, and convert the change in magnetic field to an electrical signal, for example a voltage signal, a resistance signal and/or a capacitance signal, corresponding to the size of a torque acting on the torque sensor 1.

The sensor chip element 102 is provided with a pin; the transmission part 3 is connected to the pin of the sensor chip element 102, in order to form an electrical pathway for exchanging signals with the sensor chip element 102, and thereby send out torque information detected by the torque sensor 1. In this embodiment, the transmission part 3 in the torque sensor 1 takes the form of a cable harness, but it should be understood that in actual applications, the transmission part 3 could also employ for example a rigid plug-connector, various types of terminal or another part, component or device, etc., in order to provide the abovementioned transmission channel. In this embodiment, the transmission part 3 is directly connected to the pin of the sensor chip element 102; in other embodiments, the transmission part 3 may be connected to the pin of the sensor chip element 102 via an intermediate connection member (not shown). In order to form a more sturdy overall structure, an injection molding process for example or another method may be used to join the base 101 and the transmission part 3 to form a single body.

In use, another end of the transmission part 3 may be connected to one or two electronic control units.

A brake assembly comprises a brake disk 12, a brake caliper 14, a caliper support 16 and a mounting bracket 18, wherein the brake disk 12 is securely connected to an axle (not shown), the brake caliper 14 is mounted on the caliper support 16 in such a way as to be capable of performing a clamping action, the mounting bracket 18 is securely mounted on the vehicle body, and the caliper support 16 is securely connected to the mounting bracket 18. The caliper support 16 is provided with a first mounting hole 160, and the mounting bracket 18 is provided with a second mounting hole 180, for the purpose of securely connecting the caliper support 16 and the mounting bracket 18. The numbers of first mounting holes 160 and second mounting holes 180 are set according to actual mounting requirements. The mounting bracket 18 comprises a bottom face 1802, and a supporting face 1801 protruding inside the second mounting hole 180; the supporting face 1801 is configured to support the second shoulder 24. The distance between the supporting face 1801 and the bottom face 1802 is substantially equal to the distance between a bottom face of the first shoulder 23 and a top face of the second shoulder 24. Preferably, corresponding to the provision of the external thread on the outer surface of at least one of the first fixing end 21 and second fixing end 22, a corresponding at least one of the first mounting hole 160 and second mounting hole 180 is provided with an internal thread, for mating with the external thread. In this embodiment, internal threads are provided in both the first mounting hole 160 and the second mounting hole 180, for mating with the corresponding external threads of the first fixing end 21 and the second fixing end 22 respectively.

When assembly is performed, one or more torque sensors 1 according to the present invention are fitted between the caliper support 16 and the mounting bracket 18, instead of one or more bolts in the prior art. Specifically, the first fixing end 21 is securely inserted into the first mounting hole 160 of the caliper support 16, such that the first shoulder 23 abuts a surface of the caliper support 16, and the second fixing end 22 is securely inserted into the second mounting hole 180 of the mounting bracket 18, such that the second shoulder 24 abuts the supporting face 1801. In this embodiment, the first fixing end 21 is screwed into the first mounting hole 160 of the caliper support 16, the second fixing end 22 is inserted into the second mounting hole 180 of the mounting bracket 18, the second fixing end 22 is fixed in the second mounting hole 180 by means of a bush 182, and a nut 181 is then screwed onto the second fixing end 22, thereby connecting the caliper support 16 and the mounting bracket 18 securely together.

The brake assembly further comprises brake pads arranged on the brake caliper 14, piston assemblies and other structures; the structure and operating principles of the brake assembly are familiar to those skilled in the art, so are not described superfluously here.

In use, when the brake caliper 14 applies a braking force to the brake disk 12, the brake disk 12 subjects the caliper support 16 and mounting bracket 18 to a tangential force, which causes the deformation part 25 of the sensor head between the caliper support 16 and the mounting bracket 18 to experience minute deformation, causing a change in magnetic field; the sensor chip element 102 detects the change in magnetic field caused by the minute deformation, and converts the change in magnetic field to an electrical signal, for example a voltage signal, a resistance signal and/or a capacitance signal, thereby detecting the size of the braking torque acting on the brake disk 12.

According to the design concept of the present invention, the torque sensor 1 of the present invention is fitted between the caliper support 16 and the mounting bracket 18, and can not only be used to detect the size of braking torque, but can also securely connect the caliper support 16 and mounting bracket 18 together in place of a bolt in the prior art; there is no need to alter the structure of the existing brake assembly, installation is convenient, the overall cost is low, and detected signals are stable and reliable.

Although the present invention has been explained and described here with reference to specific embodiments, the present invention is not limited to the details shown, but it is only limited within the scope of the appended claims.

## Claims

1. A torque sensor (1) configured to be fitted between a caliper support (16) and a mounting bracket (18) of a brake assembly, and to securely connect the caliper support (16) and the mounting bracket (18), the torque sensor (1) having a sensor head and a transmission part (3), wherein the sensor head comprises a base (101), a sensor chip element (102) and a casing (2), the casing (2) being substantially columnar, the casing (2) having a receiving space provided therein for receiving the base (101), the sensor chip element (102) and at least a portion of the transmission part (3), and the sensor chip element (102) being electrically connected to the transmission part (3), wherein the casing (2) is made of a high-strength metal, and the casing (2) comprises a first fixing end (21), a second fixing end (22) and a deformation part (25) located between the first fixing end (21) and second fixing end (22), wherein the first fixing end (21) and second fixing end (22) are configured to be used to securely connect the caliper support (16) and the mounting bracket (18), and the deformation part (25) is magnetic, and configured to generate a magnetic field.

2. The torque sensor (1) as claimed in claim 1, wherein the casing (2) is made of high-strength alloy steel, high-strength stainless steel or universal high-strength bolt material.

3. The torque sensor (1) as claimed in claim 2, wherein an external thread is provided on an outer surface of at least one of the first fixing end (21) and second fixing end (22); or external threads are provided on outer surfaces of both the first fixing end (21) and the second fixing end (22).

4. The torque sensor (1) as claimed in claim 3, wherein the casing (2) comprises a first shoulder (23) and a second shoulder (24), wherein the first shoulder (23) is close to the first fixing end (21), and the second shoulder (24) is close to the second fixing end (22); a sunken region is provided between the first shoulder (23) and second shoulder (24), thereby forming the deformation part (25), a depth of the sunken region being set according to deformation requirements for the deformation part (25).

5. The torque sensor (1) as claimed in claim 4, wherein the sensor chip element (102) is securely disposed on the base (101), and is a torque information acquisition component in the torque sensor.

6. The torque sensor (1) as claimed in claim 5, wherein the sensor chip element (102) is an integrated circuit element having the function of sensing a change in magnetic field; the sensor chip element (102) is close to the deformation part (25), and configured to detect a change in magnetic field caused by minute deformation experienced by the deformation part (25) when subjected to a force, and convert the change in magnetic field to an electrical signal, for example a voltage signal, a resistance signal and/or a capacitance signal, corresponding to the size of a torque acting on the torque sensor (1).

7. The torque sensor (1) as claimed in claim 6, wherein the sensor chip element (102) is provided with a pin, and the transmission part (3) is connected to the pin of the sensor chip element (102).

8. A brake assembly, comprising a brake disk (12), a brake caliper (14), a caliper support (16) and a mounting bracket (18), wherein the brake disk (12) is securely connected to an axle, the brake caliper (14) is mounted on the caliper support (16) in such a way as to be capable of performing a clamping action, the mounting bracket (18) is securely mounted on a vehicle body, and the caliper support (16) is securely connected to the mounting bracket (18); one or more of the torque sensor (1) as claimed in any one of claims 1 to 7 is fitted between the caliper support (16) and the mounting bracket (18), securely connecting the caliper support (16) and the mounting bracket (18).

9. The brake assembly as claimed in claim 8, wherein the caliper support (16) is provided with a first mounting hole (160), the mounting bracket (18) is provided with a second mounting hole (180), the first fixing end (21) is screwed into the first mounting hole (160) of the caliper support (16), and the second fixing end (22) is inserted into the second mounting hole (180) of the mounting bracket (18).

10. The brake assembly as claimed in claim 9, wherein, corresponding to the provision of an external thread on an outer surface of at least one of the first fixing end (21) and second fixing end (22), a corresponding at least one of the first mounting hole (160) and second mounting hole (180) is provided with an internal thread, for mating with the external thread; or internal threads are provided in both the first mounting hole (160) and the second mounting hole (180), for mating with corresponding external threads of the first fixing end (21) and second fixing end (22) respectively.

11. The brake assembly as claimed in claim 10, wherein the mounting bracket (18) comprises a bottom face (1802), and a supporting face (1801) protruding inside the second mounting hole (180), the supporting face (1801) being configured to support the second shoulder (24); the distance between the supporting face (1801) and the bottom face (1802) is substantially equal to the distance between a top face of the first shoulder (23) and a bottom face of the second shoulder (24); the first shoulder (23) is configured to abut a surface of the caliper support (16), the second shoulder (24) is configured to abut the supporting face (1801), and a bush (182) is provided between the second fixing end (22) and the second mounting hole (180).

## Patentansprüche

1. Drehmomentsensor (1), der dazu ausgelegt ist, zwischen einem Bremssattelträger (16) und einer Befestigungshalterung (18) einer Bremsanordnung angeordnet zu werden und den Bremssattelträger (16) und die Befestigungshalterung (18) sicher miteinander zu verbinden, wobei der Drehmomentsensor (1) einen Sensorkopf und ein Übertragungsteil (3) aufweist, wobei der Sensorkopf eine Basis (101), ein Sensorchip-Element (102) und ein Gehäuse (2) umfasst, das Gehäuse (2) im Wesentlichen säulenförmig ist, das Gehäuse (2) einen darin vorgesehenen Aufnahmeraum zum Aufnehmen der Basis (101), des Sensorchip-Elements (102) und mindestens eines Abschnitts des Übertragungsteils (3) aufweist und das Sensorchip-Element (102) elektrisch mit dem Übertragungsteil (3) verbunden ist, wobei das Gehäuse (2) aus einem hochfesten Metall gebildet ist und das Gehäuse (2) ein erstes Befestigungsende (21), eine zweites Befestigungsende (22) und ein zwischen dem ersten Befestigungsende (21) und dem zweiten Befestigungsende(22) angeordnetes Verformungsteil (25) umfasst, wobei das erste Befestigungsende (21) und das zweite Befestigungsende (22) dazu ausgelegt sind, den Bremssattelträger (16) und die Befestigungshalterung (18) sicher miteinander zu verbinden, und das Verformungsteil (25) magnetisch ist und dazu ausgelegt ist, ein Magnetfeld zu erzeugen.

2. Drehmomentsensor (1) nach Anspruch 1, wobei das Gehäuse (2) aus hochfestem legiertem Stahl, hochfestem rostfreiem Stahl oder universellem hochfestem Schraubenmaterial gebildet ist.

3. Drehmomentsensor (1) nach Anspruch 2, wobei auf einer Außenfläche von mindestens einem des ersten Befestigungsendes (21) und des zweiten Befestigungsendes (22) ein Außengewinde vorgesehen ist oder wobei auf der Außenfläche sowohl des ersten Befestigungsendes (21) als auch des zweiten Befestigungsendes (22) ein Außengewinde vorgesehen ist.

4. Drehmomentsensor (1) nach Anspruch 3, wobei das Gehäuse (2) eine erste Schulter (23) und eine zweite Schulter (24) umfasst, wobei die erste Schulter (23) in der Nähe des ersten Befestigungsendes (21) und die zweite Schulter (24) in der Nähe des zweiten Befestigungsendes (22) angeordnet ist; wobei zwischen der ersten Schulter (23) und der zweiten Schulter (24) ein vertiefter Bereich vorgesehen ist, wodurch das Verformungsteil (25) gebildet wird, wobei die Tiefe des vertieften Bereichs gemäß den Deformationsanforderungen für das Verformungsteil (25) festgelegt ist.

5. Drehmomentsensor (1) nach Anspruch 4, wobei das Sensorchip-Element (102) sicher auf der Basis (101) angeordnet ist und eine Drehmoment-Informationsaufnahmekomponente im Drehmomentsensor ist.

6. Drehmomentsensor (1) nach Anspruch 5, wobei das Sensorchip-Element (102) ein integriertes Schaltungselement ist, das die Funktion besitzt, eine Änderung des Magnetfelds zu erfassen; wobei sich das Sensorchip-Element (102) in der Nähe des Verformungsteils (25) befindet und dazu ausgelegt ist, eine durch eine feine Deformation des Verformungsteils (25) bei Krafteinwirkung verursachte Änderung des Magnetfelds zu erfassen und diese Änderung des Magnetfelds in ein elektrisches Signal, beispielsweise ein Spannungssignal, ein Widerstandssignal und/oder ein Kapazitätssignal, umzuwandeln, das der Größe eines auf den Drehmomentsensor (1) wirkenden Drehmoments entspricht.

7. Drehmomentsensor (1) nach Anspruch 6, wobei das Sensorchip-Element (102) mit einem Anschlussstift versehen ist und das Übertragungsteil (3) mit dem Anschlussstift des Sensorelements (102) verbunden ist.

8. Bremsanordnung, umfassend eine Bremsscheibe (12), einen Bremssattel (14), einen Bremssattelträger (16) und eine Befestigungshalterung (18), wobei die Bremsscheibe (12) sicher mit einer Achse verbunden ist, der Bremssattel (14) auf dem Bremssattelträger (16) so montiert ist, dass er eine Klemmwirkung ausüben kann, die Befestigungshalterung (18) sicher an einer Fahrzeugkarosserie befestigt ist und der Bremssattelträger (16) sicher mit der Befestigungshalterung (18) verbunden ist; wobei eines oder mehrere der Drehmomentsensoren (1) nach einem der Ansprüche 1 bis 7 zwischen dem Bremssattelträger (16) und der Befestigungshalterung (18) angeordnet sind und den Bremssattelträger (16) und die Befestigungshalterung (18) sicher miteinander verbinden.

9. Bremsanordnung nach Anspruch 8, wobei der Bremssattelträger (16) mit einem ersten Montageloch (160) versehen ist, die Befestigungshalterung (18) mit einem zweiten Montageloch (180) versehen ist, das erste Befestigungsende (21) in das erste Montageloch (160) des Bremssattelträgers (16) eingeschraubt ist und das zweite Befestigungsende (22) in das zweite Montageloch (180) der Befestigungshalterung (18) eingesetzt ist.

10. Bremsanordnung nach Anspruch 9, wobei, entsprechend der Bereitstellung eines Außengewindes an einer Außenfläche von mindestens einem des ersten Befestigungsendes (21) und des zweiten Befestigungsendes (22), ein entsprechendes mindestens eines des ersten Montagelochs (160) und des zweiten Montagelochs (180) mit einem Innengewinde versehen ist, um mit dem Außengewinde zusammenzuwirken, oder wobei sowohl im ersten Montageloch (160) als auch im zweiten Montageloch (180) ein Innengewinde vorgesehen ist, um mit dem entsprechenden Außengewinde des ersten Befestigungsendes (21) bzw. des zweiten Befestigungsendes (22) zusammenzuwirken.

11. Bremsanordnung nach Anspruch 10, wobei die Montagehalterung (18) eine untere Fläche (1802) und eine Stützfläche (1801) umfasst, die innerhalb des zweiten Montagelochs (180) vorsteht, wobei die Stützfläche (1801) dazu ausgelegt ist, die zweite Schulter (24) zu stützen; der Abstand zwischen der Stützfläche (1801) und der unteren Fläche (1802) im Wesentlichen gleich dem Abstand zwischen einer oberen Fläche der ersten Schulter (23) und einer unteren Fläche der zweiten Schulter (24) ist; die erste Schulter (23) dazu ausgelegt ist, an einer Oberfläche der Sattelstütze (16) anzuliegen, die zweite Schulter (24) dazu ausgelegt ist, an der Stützfläche (1801) anzuliegen, und eine Buchse (182) zwischen dem zweiten Befestigungsende (22) und dem zweiten Befestigungsloch (180) vorgesehen ist.

## Revendications

1. Capteur de couple (1) conçu pour être ajusté entre un support d'étrier (16) et une équerre de montage (18) d'un ensemble frein et pour relier solidement le support d'étrier (16) et l'équerre de montage (18), le capteur de couple (1) ayant une tête capteur et une partie transmission (3), dans lequel la tête capteur comprend une base (101), un élément puce de capteur (102) et un corps (2), le corps (2) étant sensiblement colonnaire, l'intérieur du corps (2) étant pourvu d'un espace de réception pour la réception de la base (101), de l'élément puce de capteur (102) et d'au moins une portion de la partie transmission (3) et l'élément puce de capteur (102) étant électriquement connecté à la partie transmission (3), dans lequel le corps (2) est constitué d'un métal à haute résistance et le corps (2) comprend une première extrémité de fixation (21), une seconde extrémité de fixation (22) et une partie de déformation (25) située entre la première extrémité de fixation (21) et la seconde extrémité de fixation (22), dans lequel la première extrémité de fixation (21) et la seconde extrémité de fixation (22) sont conçues pour être utilisées pour relier solidement le support d'étrier (16) et l'équerre de montage (18) et la partie de déformation (25) est magnétique et conçue pour générer un champ magnétique.

2. Capteur de couple (1) tel que revendiqué dans la revendication 1, dans lequel le corps (2) est constitué d'acier allié à haute résistance, d'acier inoxydable à haute résistance ou de matériau de boulon à haute résistance universel.

3. Capteur de couple (1) tel que revendiqué dans la revendication 2, dans lequel un filetage externe est pourvu sur une surface extérieure d'au moins l'une de la première extrémité de fixation (21) et de la seconde extrémité de fixation (22) ; ou des filetages externes sont pourvus sur les surfaces extérieures aussi bien de la première extrémité de fixation (21) que de la seconde extrémité de fixation (22).

4. Capteur de couple (1) tel que revendiqué dans la revendication 3, dans lequel le corps (2) comprend un premier épaulement (23) et un second épaulement (24), dans lequel le premier épaulement (23) est près de la première extrémité de fixation (21) et le second épaulement (24) est près de la seconde extrémité de fixation (22) ; une zone enfoncée est pourvue entre le premier épaulement (23) et le second épaulement (24), formant ainsi la partie de déformation (25), une profondeur de la zone enfoncée étant établie en fonction des exigences de déformation pour la partie de déformation (25).

5. Capteur de couple (1) tel que revendiqué dans la revendication 4, dans lequel l'élément puce de capteur (102) est solidement disposé sur la base (101) et est un composant d'acquisition d'informations de couple du capteur de couple.

6. Capteur de couple (1) tel que revendiqué dans la revendication 5, dans lequel l'élément puce de capteur (102) est un élément circuit intégré ayant la fonction de capter un changement de champ magnétique ; l'élément capteur de couple (102) est près de la partie de déformation (25) et conçu pour détecter un changement de champ magnétique provoqué par une infime déformation subie par la partie de déformation (25) lorsqu'elle est soumise à une force et convertir le changement de champ magnétique en un signal électrique, par exemple un signal de tension, un signal de résistance et/ou un signal de capacité, correspondant à l'ampleur d'un couple agissant sur le capteur de couple (1).

7. Capteur de couple (1) tel que revendiqué dans la revendication 6, dans lequel l'élément puce de capteur (102) est pourvu d'une broche et la partie transmission (3) est reliée à la broche de l'élément puce de capteur (102).

8. Ensemble frein, comprenant un disque de frein (12), un étrier de frein (14), un support d'étrier (16) et une équerre de montage (18), dans lequel le disque de frein (12) est solidement relié à un essieu, l'étrier de frein (14) est monté sur le support d'étrier (16) de façon à pouvoir effectuer une action de serrage, l'équerre de montage (18) est solidement montée sur une carrosserie de véhicule et le support d'étrier (16) est solidement relié à l'équerre de montage (18) ; un ou plusieurs capteurs de couple (1) tels que revendiqués dans l'une quelconque des revendications 1 à 7 sont ajustés entre le support d'étrier (16) et l'équerre de montage (18), reliant solidement le support d'étrier (16) et l'équerre de montage (18).

9. Ensemble frein tel que revendiqué dans la revendication 8, dans lequel le support d'étrier (16) est pourvu d'un premier trou de montage (160), l'équerre de montage (18) est pourvue d'un second trou de montage (180), la première extrémité de fixation (21) est vissée dans le premier trou de montage (160) du support d'étrier (16) et la seconde extrémité de fixation (22) est insérée dans le second trou de montage (180) de l'équerre de montage (18).

10. Ensemble frein tel que revendiqué dans la revendication 9, dans lequel, en correspondance avec le fait qu'un filetage externe est pourvu sur une surface extérieure d'au moins l'une de la première extrémité de fixation (21) et de la seconde extrémité de fixation (22), au moins l'un du premier trou de montage (160) et du second trou de montage (180) correspondant est pourvu d'un filetage interne, pour s'accoupler avec le filetage externe ; ou des filetages internes sont pourvus aussi bien dans le premier trou de montage (160) que dans le second trou de montage (180), pour s'accoupler avec les filetages externes correspondants de la première extrémité de fixation (21) et de la seconde extrémité de fixation (22) respectivement.

11. Ensemble frein tel que revendiqué dans la revendication 10, dans lequel l'équerre de montage (18) comprend une face inférieure (1802) et une face de support (1801) faisant saillie à l'intérieur du second trou de montage (180), la face de support (1801) étant conçue pour supporter le second épaulement (24) ; la distance entre la face de support (1801) et la face inférieure (1802) est sensiblement égale à la distance entre une face supérieure du premier épaulement (23) et une face inférieure du second épaulement (24) ; le premier épaulement (23) est conçu pour venir s'appuyer sur une surface du support d'étrier (16), le second épaulement (24) est conçu pour venir s'appuyer sur la surface de support (1801) et une bague (182) est pourvue entre la seconde extrémité de fixation (22) et le second trou de montage (180).
